# EUROPEAN PATENT SPECIFICATION

(11) **EP 3 141 817 B1**
(45) Date of publication and mention of the grant of the patent: **04.12.2019**
(21) Application number: 16187715.4
(22) Date of filing: 07.09.2016
(51) Int. Cl.: F23R 3/10, F23R 3/12, F23R 3/28

(54) **GAS TURBINE COMBUSTOR**
GASTURBINENBRENNKAMMER
CHAMBRE DE COMBUSTION DE TURBINE À GAZ

(30) Priority: 10.09.2015 JP 2015178176
(43) Date of publication of application: 15.03.2017
(73) Proprietor: Mitsubishi Hitachi Power Systems, Ltd., Nishi-ku Yokohama 220-8401 (JP)
(72) Inventor: ABE, Kazuki, Yokohama, 220-8401 (JP); KOGANEZAWA, Tomomi, Yokohama, 220-8401 (JP); MIURA, Keisuke, Yokohama, 220-8401 (JP)
(74) Representative: MERH-IP Matias Erny Reichl Hoffmann Patentanwälte PartG mbB

(56) References cited:
- WO-A1-2014/141397
- JP-A- 2014 055 697
- US-A1- 2007 199 325
- US-A1- 2012 045 725
- US-A1- 2013 061 594
- US-A1- 2014 083 102

## Description

### BACKGROUND OF THE INVENTION

### 1. Field of the Invention

The present invention relates to a gas turbine combustor.

### 2. Description of the Related Art

Recent regulations on, and social needs for, environmental conservation have resulted in a need for even greater efficiency and further reduction in the amount of nitrogen oxide (NOx) emissions offered by gas turbines that include, for example, compressors, combustors, and turbines. A known technique for achieving greater efficiency in the gas turbine of this type is to increase the temperature of a flame formed in the combustor to thereby increase the temperature of the combustion gas at a turbine inlet. This technique, however, entails an increased amount of NOx emissions with an increasing flame temperature.

As a combustor that is intended for use in reducing the amount of NOx emissions, a known combustor adopts premixed combustion. Premixed combustion refers to a combustion system in which fuel and air are mixed together in advance and a resultant mixture is supplied to a combustion chamber for combustion. Because fuel and air are mixed together in advance before being supplied to the combustion chamber in premixed combustion, the temperature of a flame formed in the combustion chamber is equalized and the amount of NOx emissions in the combustor is reduced accordingly. When the temperature of air or hydrogen content in fuel increases, however, a combustion velocity increases. The increased combustion velocity causes what is called a backfire to be likely to occur, in which the flame formed in the combustion chamber flows back into a premixer. A combustor that reduces the amount of NOx emissions and backfire resistance has been developed is offered (see, for example, JP-A-2014-55697).

Furthermore, US 2014/00 83 102 A1 discloses a combustor according to the preamble of claim 1. This combustor can form stable flame and reduce the metal temperature at a liner and an outlet end face of a burner.

US 2012/00 45 725 A1 discloses combustor of a gas turbine having a structure for reducing deflection and turbulence of airflow flowing inside the combustor.

### SUMMARY OF THE INVENTION

In the configuration disclosed in JP-A-2014-55697, an end cover of a combustor has a central region protruding toward the side of an air hole plate and a recessed region is formed on an outer peripheral side in a radial direction of the end cover. This configuration reduces a pressure deviation in an inlet side of the air hole plate in the radial direction, a deviation in an air flow rate supplied to each air hole, and a radial deviation in a fuel-air ratio, thereby achieving both low NOx combustion and a stable operation of the combustor.

For the configuration disclosed in JP-A-2014-55697, however, decreased momentum of air causes air to tend to stagnate in the recessed region. This tendency makes it difficult to reduce the deviation in the air flow rate supplied to each air hole and to reduce the radial deviation in the fuel-air ratio. Moreover, the configuration disclosed in JP-A-2014-55697 is difficult to manufacture to result accordingly in an increased manufacturing cost.

The present invention has been made in view of the foregoing situation and it is an object of the present invention to provide a gas turbine combustor capable of reducing a deviation in the air flow rate supplied to each air hole.

To achieve the foregoing object, the present invention provides a gas turbine combustor. The gas turbine combustor includes: an inner casing that defines thereinside a combustion chamber; an outer casing disposed so as to cover the inner casing; an annular flow path disposed between the inner casing and the outer casing, the annular flow path allowing high-pressure air to flowing therethrough; a fuel header disposed downstream of the outer casing in a flow direction of the high-pressure air; a plurality of fuel nozzles supported concentrically on the fuel header; an air hole plate disposed downstream of the fuel nozzles in a flow direction of fuel, the air hole plate having a plurality of air holes associated with the respective fuel nozzles; a guide including a wall portion that protrudes from an outer peripheral surface of the air hole plate further than an outer peripheral side of the inner casing and a bent portion formed into a convex shape protruding toward the outer casing and the fuel header and arcuately connected with an air hole of the plurality of air holes on an outermost periphery in a radial direction of the air hole plate; and an outer peripheral flow path defined between the outer peripheral surface of the air hole plate and the inner casing, the outer peripheral flow path supplying an outer peripheral portion of a part of the combustion chamber on a side of the air hole plate with the high-pressure air.

The present invention can provide a gas turbine combustor capable of reducing a deviation in the air flow rate supplied to each air hole.

### BRIEF DESCRIPTION OF THE DRAWINGS

Fig. 1 is a diagram showing an exemplary configuration of a gas turbine plant to which a combustor according to a first embodiment of the present invention is applied;
Fig. 2 is a partial cross-sectional view of a configuration of parts near a burner in the combustor according to the first embodiment of the present invention;
Fig. 3 is a diagram showing a swirl plate according to the first embodiment of the first embodiment, as viewed from a combustion gas downstream side;
Fig. 4 is a partial enlarged view of the swirl plate according to the first embodiment, or a cross-sectional view taken along the arrowed line IV-IV of Fig. 3;
Fig. 5 is an enlarged view of area A enclosed by the dotted line in Fig. 2;
Fig. 6 is a diagram showing schematically a flow of fuel and air in areas around a guide according to the first embodiment of the present invention;
Fig. 7 is a diagram showing fuel staging in the combustor according to the first embodiment of the present invention;
Fig. 8 is a diagram showing numerical fluid analysis result that illustrates deviations in an air flow rate supplied to first to eighth rows;
Fig. 9 is a diagram illustrating a relation between a degree of uniformity of fuel and an amount of NOx emissions;
Fig. 10 is a diagram showing schematically the flow of fuel and air in areas around a guide according to a second embodiment of the present invention;
Fig. 11 is a diagram showing schematically the flow of fuel and air in areas around a guide according to a third embodiment of the present invention;
Fig. 12 is a diagram showing schematically the flow of fuel and air in areas around a guide according to a fourth embodiment of the present invention;
Fig. 13 is a diagram showing schematically the flow of fuel and air in areas around a guide according to a fifth embodiment of the present invention;
Fig. 14 is a diagram showing schematically the flow of fuel and air in areas around a guide according to a sixth embodiment of the present invention;
Fig. 15 is a cross-sectional view taken along the arrowed line XV-XV of Fig. 14;
Fig. 16 is a diagram showing a modification of the multi-hole plate according to a sixth embodiment of the present invention;
Fig. 17 is a diagram showing schematically the flow of fuel and air in areas around a guide according to a seventh embodiment of the present invention;
Fig. 18 is a sectional view of a combustor according to an eighth embodiment of the present invention; and
Fig. 19 is a view of an air hole plate of the combustor according to the eighth embodiment as viewed from downstream of a flow direction of the combustion gas.

### DESCRIPTION OF THE PREFERRED EMBODIMENTS

### <First Embodiment>

### (Configuration)

### 1. Gas turbine plant

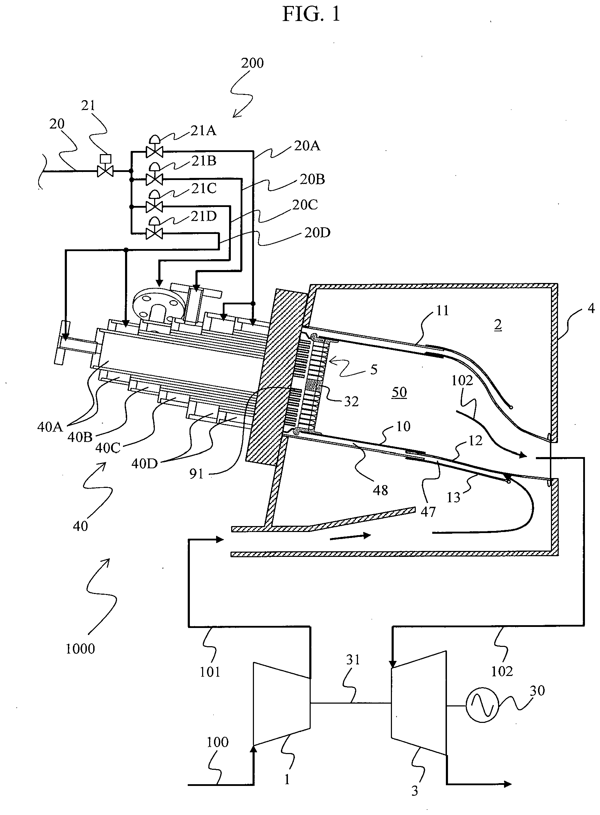

Fig. 1 is a diagram showing an exemplary configuration of a gas turbine plant to which a gas turbine combustor (hereinafter referred to as a combustor) according to a first embodiment of the present invention is applied. As shown in Fig. 1, the gas turbine plant 1000 according to the first embodiment includes a compressor 1, a combustor 2, a turbine 3, and a generator 30.

The compressor 1 is rotatably driven by the turbine 3. The compressor 1 compresses air (intake air) 100 drawn in via an intake portion (not shown) to generate high-pressure air (combustion air) 101 and supplies the high-pressure air 101 to the combustor 2. The combustor 2 mixes the high-pressure air 101 supplied from the compressor 1 with fuel supplied from a fuel system 200 (to be described later) and burns a resultant mixture to thereby generate a combustion gas 102 at high temperature. The combustor 2 then supplies the combustion gas 102 to the turbine 3. The turbine 3 is rotatably driven through expansion of the combustion gas 102 supplied from the combustor 2. The generator 30 is connected coaxially with the turbine 3 and converts rotational power of the turbine 3 into electric power. In the first embodiment, the compressor 1, the turbine 3, and the generator 30 are connected with each other by a shaft 31.

### 2. Combustor

The combustor 2 is mounted in a casing 4 of the gas turbine. The combustor 2 includes a burner 5, a combustor liner (hereinafter referred to as an inner casing) 10, a flow sleeve (hereinafter referred to as an outer casing) 11, a transition piece inner casing 12, a transition piece outer casing 13, the fuel system 200, and a fuel header 40.

The inner casing 10 is disposed downstream of the burner 5 in a flow direction of the combustion gas 102. In the following, "upstream" and "downstream" in a flow direction of the combustion gas 102 will be referred to as "combustion gas upstream" and "combustion gas downstream." The inner casing 10 is formed into a cylinder to isolate the high-pressure air 101 supplied from the compressor 1 from the combustion gas 102 generated in the combustor 2. The outer casing 11 is formed into a cylinder disposed on an outer peripheral side of the inner casing 10 so as to cover thereinside the inner casing 10. An annular space formed between the inner casing 10 and the outer casing 11 constitutes an annular flow path (first annular flow path) 48 through which the high-pressure air 101 supplied from the compressor 1 to the combustor 2 flows. The high-pressure air 101 that flows through the first annular flow path 48 convectively cools the inner casing 10 from an outer wall surface side of the inner casing 10. A wall surface of the inner casing 10 has a plurality of holes (not shown) formed therein. Part of the high-pressure air 101 that flows through the first annular flow path 48 flows through the holes formed in the wall surface of the inner casing 10 into an inside of the inner casing 10 and is used for film cooling of an inner peripheral surface of the inner casing 10. A portion of the high-pressure air 101 flowing through the first annular flow path 48, not used for the film cooling of the inner casing 10 flows through the first annular flow path 48 to reach the burner 5. The portion of the high-pressure air 101 that has reached the burner 5 is fed into, and burned in, a combustion chamber 50 with fuel supplied from the fuel system 200 to the burner 5 via the fuel header 40.

The combustion chamber 50 is formed on the inside of the inner casing 10. In the combustion chamber 50, a mixture of the high-pressure air 101 supplied from the compressor 1 and the fuel supplied from the fuel system 200 is burned and, as a result, the combustion gas 102 is generated. The inner casing 10 has a side distal from the burner 5 (combustion gas downstream side) inserted into a first end of the transition piece inner casing 12. The transition piece inner casing 12 has a second end connected with a line (not shown) that connects the combustor 2 with the turbine 3. The transition piece inner casing 12 has a function of guiding the combustion gas 102 generated in the combustion chamber 50 to the turbine 3. The cylindrical transition piece outer casing 13 that covers the transition piece inner casing 12 is disposed on an outer peripheral side of the transition piece inner casing 12. The outer casing 11 has a side distal from the burner 5 (combustion gas downstream side) inserted into a first end of the transition piece outer casing 13. The transition piece outer casing 13 has a second end opening to an inside of the casing 4. An annular space formed between the transition piece inner casing 12 and the transition piece outer casing 13 constitutes an annular flow path (second annular flow path) 47 through which the high-pressure air 101 supplied from the compressor 1 to the combustor 2 is guided into the first annular flow path 48. The high-pressure air 101 that flows through the second annular flow path 47 convectively cools the transition piece inner casing 12 from an outer wall surface side of the transition piece inner casing 12.

The fuel system 200 includes a common fuel system 20 and first through fourth fuel systems 20A to 20D. The common fuel system 20 connects to a fuel supply source (not shown). The common fuel system 20 includes a fuel shut-off valve (open/close valve) 21. The first through fourth fuel systems 20A to 20D include first through fourth fuel flow rate control valves 21A to 21D, respectively. In the first embodiment, the first through fourth fuel systems 20A to 20D branch in parallel from the common fuel system 20. It is noted that the number of fuel systems branching from the common fuel system 20 is not limited to four.

Fuel that flows through the first through fourth fuel systems 20A to 20D is supplied to the fuel header 40 that is partitioned according to a radial distance from a central axis of the inner casing 10. The fuel header 40 is disposed downstream in a flow direction of the high-pressure air 101 that flows through the first annular flow path 48 of the outer casing 11. In the following, "upstream" and "downstream" in the flow direction of the high-pressure air 101 flowing through the first annular flow path 48 will be referred to as "air upstream" and "air downstream." The fuel header 40 closes a first end (end on the air downstream side) of the outer casing 11. In the first embodiment, the fuel header 40 is partitioned into a first header portion 40A, a second header portion 40B, a third header portion 40C, and a fourth header portion 40D in sequence from the central axis of the inner casing 10 outwardly in the radial direction. The first through fourth header portions 40A to 40D connect to the first through fourth fuel systems 20A to 20D, respectively. Fuel supplied to the first through fourth header portions 40A to 40D through the first through fourth fuel systems 20A to 20D is injected from a leading end of a fuel nozzle 91 (to be described later) to be supplied to the burner 5. It is noted that the number of partitions of the fuel header 40 is not limited to four.

Fuel supplied to the first header portion 40A through the first fuel system 20A (hereinafter referred to as an F1 fuel) has a flow rate regulated by the first fuel flow rate control valve 21A. Similarly, fuel supplied to the second to fourth header portions 40B, 40C, and 40D through the second to fourth fuel systems 20B, 20C, and 20D (hereinafter referred to as F2, F3, and F4 fuels) has a flow rate regulated by the second to fourth fuel flow rate control valves 21B, 21C, and 21D, respectively. In the first embodiment, the first to fourth fuel flow rate control valves 21A to 21D control flow rates of the respective F1 to F4 fuels individually to thereby control an amount of power generation of the gas turbine plant 1000.

### 3. Burner

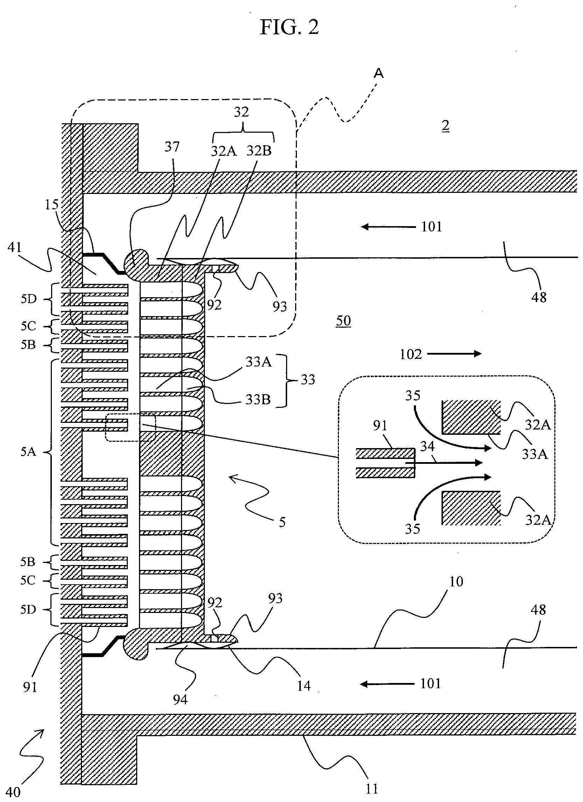

Fig. 2 is a partial cross-sectional view of a configuration of parts near the burner in the combustor according to the first embodiment of the present invention. As shown in Fig. 2, the burner 5 is partitioned into a plurality of (eight in the first embodiment) annular rows arrayed concentrically about the central axis (not shown) of the inner casing 10. The annular rows will be referred to as a first row, a second row, ..., and an eighth row, as appropriate, from the inner peripheral side toward the outer peripheral side.

As shown in Fig. 2, in the first embodiment, the four rows in the innermost region of the annular rows (the first to fourth rows) constitute a first burner portion 5A, the fifth row constitutes a second burner portion 5B, the sixth row constitutes a third burner portion 5C, and the two rows on the outer peripheral side (the seventh and eighth rows) constitute a fourth burner portion 5D. The F1 to F4 fuels are supplied to the first to fourth burner portions 5A to 5D via the first to fourth header portions 40A to 40D described previously. The F1 to F4 fuels supplied to the first to fourth burner portions 5A to 5D flow into the fuel nozzles 91 and are injected into the combustion chamber 50. In the first embodiment, the flow rate of each of the F1 to F4 fuels supplied to the first to fourth burner portions 5A to 5D from the first to fourth fuel systems 20A to 20D is individually regulated to enable fuel staging to be described later. The burner 5 includes a plurality of fuel nozzles 91 and an air hole plate 32.

### 3-1. Fuel nozzle

As shown in Fig. 2, the fuel nozzles 91 are supported by the fuel header 40. The fuel nozzles 91 each have a cylindrically formed leading end, injecting fuel supplied from the fuel system 200 (shown in Fig. 1) toward the air hole plate 32. The fuel nozzles 91 are arrayed circumferentially along first to eighth rows that are concentric with each other (arrayed annularly).

### 3-2. Air hole plate

As shown in Fig. 2, the air hole plate 32 is disposed downstream of the fuel nozzles 91 in a flow direction of the fuel. In the following, "upstream" and "downstream" in the flow direction of the fuel will be referred to as "fuel upstream" and "fuel downstream." The air hole plate 32 has a plurality of air holes 33 (33A and 33B) arrayed concentrically to be associated with the respective fuel nozzles 91. The air hole plate 32 is mounted on the fuel header 40 via a support 15. A supply flow path 41 is formed between the air hole plate 32 and the fuel header 40. In the first embodiment, the support 15 is formed of a flat plate subjected to bending. The support 15 formed into this shape allows the bent structure to absorb thermal expansion in the circumferential direction of the air hole plate 32, leading to enhanced reliability of the burner 5. An annular space formed between an outer peripheral surface of the air hole plate 32 and the inner casing 10 constitutes an outer peripheral flow path 94 through which part of the high-pressure air 101 flowing through the first annular flow path 48 is supplied to an outer peripheral portion of the combustion chamber 50. The air hole plate 32, in addition to being mounted on the fuel header 40 via the support 15 as described above, is held on the inside of the inner casing 10 via a spring seal 14. The spring seal 14 is disposed between the outer peripheral surface of the air hole plate 32 and the inner casing 10. The spring seal 14 has a slit (not shown) formed therein to offer resilience. Additionally, the spring seal 14 has a hole (not shown) formed therein through which the high-pressure air 101 flowing through the outer peripheral flow path 94 can flow. The air hole plate 32 includes a base plate 32A, a swirl plate 32B, and a guide 37.

### - Base plate

The base plate 32A is a disc-shaped plate coaxial with the inner casing 10. The base plate 32A is disposed fuel downstream side of the fuel nozzles 91 and spaced away from leading ends of the fuel nozzles 91. Specifically, in the first embodiment, the fuel nozzles 91 are not inserted in the air holes 33A (to be described later) formed in the base plate 32A. In the following, openings on the fuel upstream side of the air holes 33A will be referred to as "first inlets" and openings on the fuel downstream side of the air holes 33A will be referred to as "first outlets."

The base plate 32A has a plurality of air holes 33A that are associated with the respective fuel nozzles 91. Specifically, the air holes 33A are disposed whole circumferentially along first to eighth rows that are concentric with each other. The air holes 33A are disposed downstream of the fuel nozzles 91 such that each is associated with a corresponding one of the fuel nozzles 91. Disposing the fuel nozzles 91 to be associated with (to be opposed to) the respective air holes 33A in the foregoing manner results in the following. Specifically, as shown in the enlarged view of Fig. 2, a coaxial jet that includes fuel 34 injected from the fuel nozzle 91 (hereinafter referred to as a fuel jet) surrounded by air 35 passing through the air hole 33A (hereinafter referred to as an air jet) can be passed through the base plate 32A. In the first embodiment, the air hole 33A is formed into a right circular cylinder in which two circles that constitute the first inlet and the first outlet are orthogonal to a generating line and disposed coaxially with the corresponding fuel nozzle 91.

### - Swirl plate

The swirl plate 32B is a disc-shaped plate coaxial with the inner casing 10. The swirl plate 32B is disposed on the fuel downstream side of, and in tight contact with, the base plate 32A. The swirl plate 32B includes an extension 93. The extension 93 extends from a wall surface on the side adjacent to the combustion chamber 50 on the outer peripheral side in the radial direction of the swirl plate 32B toward the combustion gas downstream side. The extension 93 is intended to allow the air hole plate 32 to have a sufficient thickness in the fuel flow direction in order to reliably hold the air hole plate 32 via the spring seal 14 with respect to the inner casing 10. The extension 93 has a through hole 92. The through hole 92 passes through the extension 93 in the radial direction of the air hole plate 32, functioning as an outlet to the outer peripheral flow path 94. Specifically, the high-pressure air 101 flowing through the outer peripheral flow path 94 flows into the combustion chamber 50 via the through hole 92.

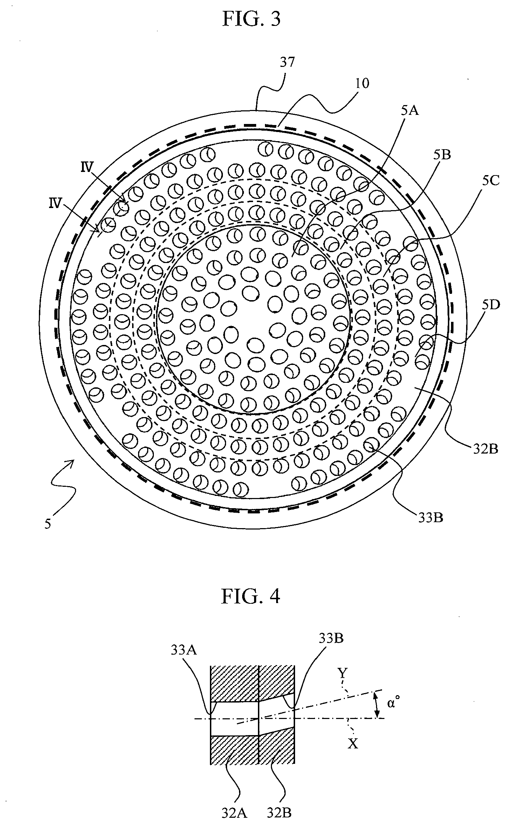

Fig. 3 is a diagram showing the swirl plate according to the first embodiment, as viewed from the combustion gas downstream side. As shown in Fig. 3, the swirl plate 32B has a plurality of air holes 33B. The air holes 33B are associated with the respective air holes 33A formed in the base plate 32A. One air hole 33B communicates with a corresponding air hole 33A. Specifically, the air holes 33B are arrayed whole circumferentially along first to eighth rows that are concentric with each other. It is noted that, in the first embodiment, the air holes 33B are identical in number to the air holes 33A.

Fig. 4 is a partial enlarged view of the swirl plate according to the first embodiment, or a cross-sectional view taken along the arrowed line IV-IV of Fig. 3. As shown in Fig. 4, the air hole 33B is formed into an oblique circular cylinder in which two ellipses that constitute openings on the fuel upstream side and the fuel downstream side are not orthogonal to a generating line. In the following, the opening on the fuel upstream side of the air hole 33B will be referred to as a "second inlet" and the opening on the fuel downstream side of the air hole 33B will be referred to as a "second outlet." The air hole 33B is a swirl air hole having a swirl angle, so that the second outlet is circumferentially offset with respect to the second inlet. More specifically, the air hole 33B is inclined circumferentially with respect to the swirl plate 32B such that a central axis Y of the air hole 33B obtained by connecting a center of the second inlet with a center of the second outlet forms a predetermined angle α° in the circumferential direction with respect to a central axis X of the air hole 33A. It should be noted that, in this specification, the predetermined angle α° assumes a parameter that determines a direction of air and fuel injected from the second outlet (inject direction) and is set to an optimum value for each annular row.

When a gap formed between two circumferentially adjacent air holes (hole-to-hole distance) is set to be greater than a flame quenching distance in the burner 5, the flame is closer to the swirl plate 32B, so that flame stability is strengthened. When the hole-to-hole distance is set to be equal to or smaller than the flame quenching distance, the flame is formed away from the swirl plate 32B. In an area near the second outlet, the flow path considerably expands over a range from the air hole 33B to the combustion chamber 50, so that mixing of the fuel jet 34 with the air jet 35 progresses at a rapid pace. As a result, the formation of the flame at a position away downstream from the swirl plate 32B causes a fuel-air pre-mixture in which fuel and air are sufficiently mixed with each other to reach the flame to burn, so that low NOx combustion can be achieved. Specifically, both stable combustion and low NOx combustion can be achieved by adjusting the hole-to-hole distance in each annular row to an optimum value.

### - Guide

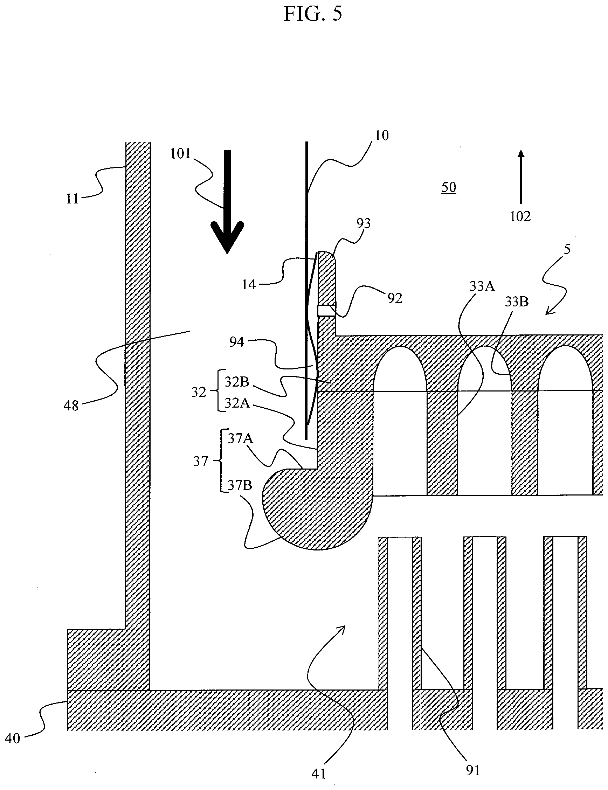

Fig. 5 is an enlarged view of area A enclosed by the dotted line in Fig. 2. In Fig. 5, the upper side as viewed from the viewer is the air upstream side and the lower side as viewed from the viewer is the air downstream side.

As shown in Fig. 5, the guide 37 is disposed on the air downstream side (trailing end side) on the outer peripheral surface of the base plate 32A. The guide 37 is spaced away from an end on the air downstream side of the inner casing 10. The guide 37 includes a wall portion 37A and a bent portion 37B.

The wall portion 37A is disposed so as to protrude from the outer peripheral surface of the base plate 32A of the air hole plate 32 further on the outer peripheral side of the inner casing 10 (toward the outer casing 11). Thus, in a cross section in the axial direction of the burner 5, the guide 37 has an outside diameter at a portion thereof closest to the outer casing 11 (hereinafter referred to as an "apex") greater than an outside diameter of the inner casing 10. Preferably, a distance between the apex of the guide 37 and the inner casing 10 in the radial direction of the air hole plate 32 should be equal to or greater than about 1/5 and equal to or smaller than about 1/2 of a distance between the outer casing 11 and the inner casing 10. This is because of the following reason. Specifically, if the distance between the apex of the guide 37 and the inner casing 10 is smaller than about 1/5 of the distance between the outer casing 11 and the inner casing 10, a stagnant zone (to be described later) tends to be difficult to occur in an area near the wall portion 37A. Meanwhile, the longer the distance between the apex of the guide 37 and the inner casing 10, the greater an effect of reducing a deviation in the air flow rate supplied to the air hole 33A in the base plate 32A; however, if the distance between the apex of the guide 37 and the inner casing 10 is set to be greater than about 1/2 of the distance between the outer casing 11 and the inner casing 10, a shorter distance between the apex of the guide 37 and the outer casing 11 results, to thus narrow the first annular flow path 48. Thus, a flow velocity of the high-pressure air 101 increases when the high-pressure air 101 flows between the apex of the guide 37 and the outer casing 11 to thereby increase total pressure loss, resulting in reduced gas turbine efficiency.

The bent portion 37B is formed into a convex shape protruding toward the outer casing 11 and the fuel header 40. In a sectional view of the air hole plate 32, the bent portion 37B is arcuately connected with the air hole 33A on an outermost periphery in the radial direction of the base plate 32A. It is noted that, in the first embodiment, the bent portion 37B connects between the wall portion 37A and the air hole 33 on an outermost periphery in the radial direction of the air hole plate 32 (specifically, the air hole 33A on the outermost periphery in the radial direction of the base plate 32A). Specifically, the bent portion 37B is formed to have such curvature as to smoothly connect between the wall portion 37A and the air hole 33A on the outermost periphery in the radial direction of the base plate 32A. This configuration results in the guide 37 being disposed such that an end thereof on the air downstream side (portion of the guide 37 closest to the fuel header 40) is closer to the fuel header 40 than the first inlet is.

### (Operation)

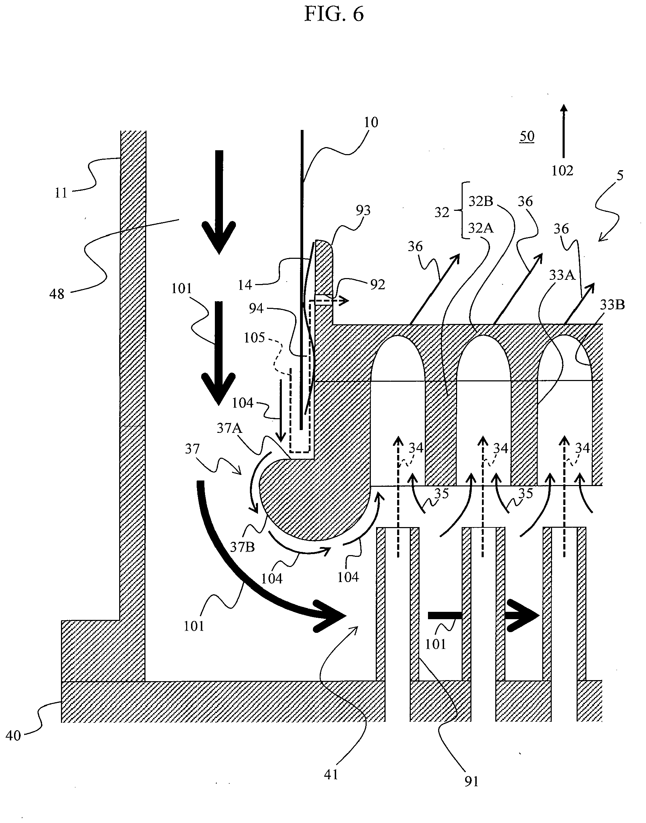

Fig. 6 is a diagram showing schematically a flow of fuel and air in areas around the guide according to the first embodiment.

As shown in Fig. 6, the portion of the high-pressure air 101 that has not been used for the film cooling of the inner casing 10 flows through the first annular flow path 48 toward the fuel header 40. This portion of the high-pressure air 101 flows from the first annular flow path 48 into the supply flow path 41 and is supplied to the air holes 33A in the base plate 32A as the air jets 35. Of the portion of the high-pressure air 101 flowing from the first annular flow path 48 into the supply flow path 41, the high-pressure air 101 flowing near the surface of the bent portion 37B (hereinafter referred to as nearby air 104) is diverted along the surface of the bent portion 37B to be guided to the outside in the radial direction of the base plate 32A and, in particular, into the air hole 33A on the outermost periphery. Part of the high-pressure air 101 flowing through the first annular flow path 48 toward the fuel header 40 along the inner casing 10 collides with the wall portion 37A of the guide 37. This collision creates a stagnant zone in an area near the wall portion 37A. Pressure in the combustion chamber 50 is lower than pressure in the first annular flow path 48 (specifically, pressure is lower at an outlet side of the outer peripheral flow path 94 than at an inlet side of the outer peripheral flow path 94). This difference in pressure between the first annular flow path 48 and the combustion chamber 50 causes the high-pressure air 101 in the stagnant zone near the wall portion 37A to flow into the outer peripheral flow path 94 in a direction opposite to (e.g., 180°) a direction in which the high-pressure air 101 flows through the first annular flow path 48. The high-pressure air 101 that has flowed into the outer peripheral flow path 94 will hereinafter be referred to as auxiliary air 105. The auxiliary air 105 passes through the hole in the spring seal 14 and is injected inwardly in the radial direction to the combustion chamber 50 via the through hole 92 formed in the extension 93 of the swirl plate 32B.

Meanwhile, fuel supplied from the fuel system 200 to the fuel nozzle 91 via the fuel header 40 is injected from an injection port at the leading end of the fuel nozzle 91 and flows as the fuel jet 34 into the air hole 33A. The fuel jet 34 that has flowed into the air hole 33A flows through the air hole 33A, while being rapidly mixed with the air jet 35, and flows as a mixture into the air hole 33B formed in the swirl plate 32B. As described previously, the air hole 33B is formed into a tube that is inclined circumferentially at the predetermined angle α° with respect to the air hole 33A (oblique circular cylinder tube). A force component in a swirl direction is thus given to the mixture that flows through the air hole 33B to thereby form a circulating flow. Because the air hole 33B communicates with the combustion chamber 50, the flow path of the mixture considerably expands, so that mixing is promoted in the area near the second outlet. The mixture of the fuel jet 34 and the air jet 35 injected from the air hole 33B is injected as a fuel-air pre-mixture 36 into, and burned in, the combustion chamber 50.

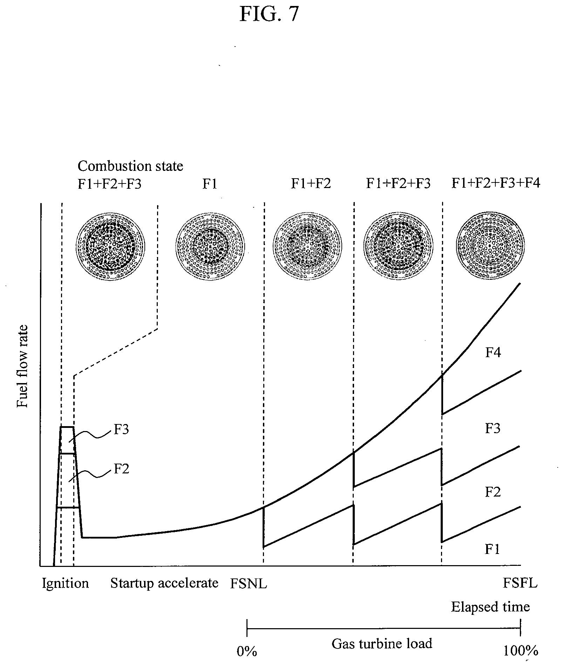

Fig. 7 is a diagram showing fuel staging in the combustor according to the first embodiment. In Fig. 7, the abscissa axis represents elapsed time and the ordinate axis represents fuel flow rate.

As shown in Fig. 7, during ignition of the gas turbine, the F1 to F3 fuels are supplied to the first to third burner portions 5A to 5C from the fuel system 200 via the first to third fuel systems 20A to 20C. Specifically, the fuel is injected from the fuel nozzles 91 disposed in the first to sixth rows of the burner 5. Meanwhile, the F4 fuel is not supplied to the fourth burner portion 5D and thus no fuel is injected from the fuel nozzles 91 disposed in the seventh and eighth rows of the burner 5.

After the gas turbine ignition, individual combustion is established in which the F1 fuel is supplied to the first burner portion 5A only (specifically, fuel is injected from the first to fourth rows only) and the turbine 3 is accelerated until a full speed no load (FSNL) state is reached. During this period, no fuel is supplied to the second to fourth burner portions 5B to 5D (specifically, no fuel is injected from the fifth to eighth rows).

When the turbine 3 is accelerated up to a rated speed thereof, power generation is started to increase gas turbine load. With the increasing gas turbine load, the F2 fuel, the F3 fuel, and the F4 fuel are additionally supplied to the second burner portion 5B, the third burner portion 5C, and the fourth burner portion 5D, in sequence, to thereby expand a fuel supply range to the fifth row, the sixth row, and the seventh and eighth rows of the burner 5 in a stepwise fashion, so that the fuel-air ratio in the burner 5 falls within a stable combustion range. The gas turbine load reaches a full speed full load (FSFL) state in a combustion state in which fuel is supplied to all of the first to fourth burner portions 5A to 5D and fuel is injected from all of the first to eighth rows.

### (Effects)

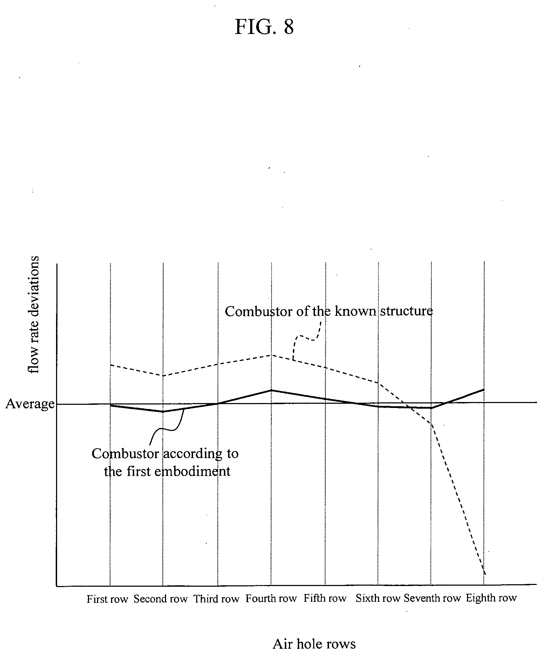

(1) Fig. 8 is a diagram showing numerical fluid analysis result that illustrates deviations in the air flow rate supplied to the first to eighth rows. In Fig. 8, the abscissa axis represents flow rate deviations and the ordinate axis represents annular rows (the first to eights rows in the first embodiment). In Fig. 8, the dotted line represents the combustor of the known structure and the solid line represents the combustor 2 according to the first embodiment.
   In the combustor 2 according to the first embodiment, the bent portion 37B of the guide 37 is formed into convex shape protruding toward the outer casing 11 and the fuel header 40 and to be arcuately connected with the air hole 33A on the outermost periphery in the radial direction of the base plate 32A. This configuration prevents the high-pressure air 101 flowing near the surface of the bent portion 37B (nearby air 104) from separating from the surface of the bent portion 37B, thereby allowing the nearby air 104 to be supplied to the outside in the radial direction of the base plate 32A and, in particular, into the air hole 33A on the outermost periphery. Thus, as shown in Fig. 8, unevenness in the air flow rate among the first to eighth rows is reduced, so that the deviations in the air flow rate can be minimized in all rows from the first to eights rows, as against the combustor of the known structure. In addition, the bent portion 37B that is formed into convex shape protruding toward the outer casing 11 enables static pressure recovery for the high-pressure air 101 on the air upstream side of the guide 37. This allows the flow rate deviation in the circumferential direction of the burner 5 to be further reduced in the high-pressure air 101 supplied to the air holes 33A in the base plate 32A.

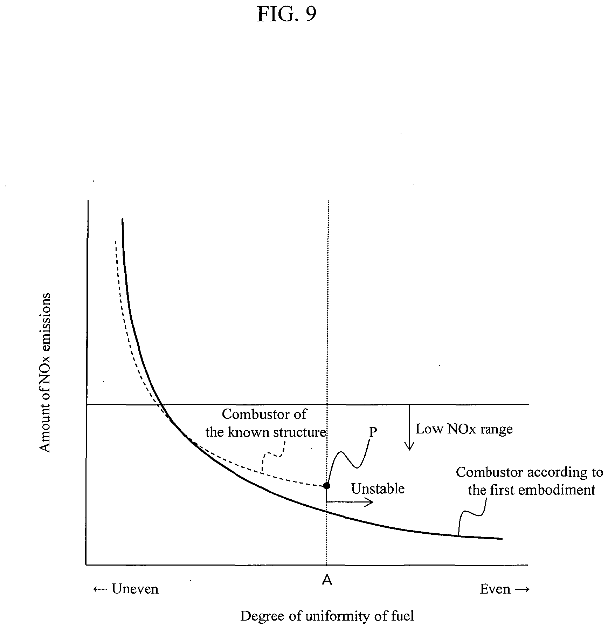

   Fig. 9 is a diagram illustrating a relation between a degree of uniformity of fuel and the amount of NOx emissions. In Fig. 9, the abscissa axis represents the degree of uniformity of fuel and the ordinate axis represents the amount of NOx emissions. In Fig. 9, the dotted line represents the combustor of the known structure and the solid line represents the combustor according to the first embodiment. It should be noted that the term "degree of uniformity of fuel," as used herein, refers to an index that indicates the degree of variations in the fuel flow rate per fuel nozzle among the annular rows (the first to eighth rows in the first embodiment). More specifically, a condition in which the variation in the fuel flow rate per fuel nozzle among the different annular rows is large will be referred to as a low degree of uniformity (uneven) and a condition in which the variation is small (e.g., the fuel flow rate is equal among all of the annular rows) will be referred to as a high degree of uniformity (even). Generally speaking, a degree of uniformity of fuel is advantageous to stable combustion, but increases the amount of NOx emissions. In contrast, a high degree of uniformity of fuel decreases the amount of NOx emissions, but makes combustion unstable.
   As shown in Fig. 9, the higher the degree of uniformity of fuel, the smaller the amount of NOx emissions; however, in the combustor of the known structure, up to point P (degree of uniformity A) in Fig. 9, combustion becomes unstable with an increasing degree of uniformity of fuel. This is because of the following reason. Specifically, in the combustor of the known structure, although the fuel flow rate in each row has been set on the assumption that the air flow rates in the first to eighth rows are substantially uniform, the air flow rates are high in the first to fourth rows that are responsible for stable combustion and a local fuel-air ratio is lower than expected. Consequently, it is difficult to set the degree of uniformity of fuel to a level equal to or higher than the degree of uniformity A in the combustor of the known structure. Additionally, in the combustor of the known structure, as shown in Fig. 8, the air flow rates are low in the seventh and eighth rows (the eights row in particular) on the outer peripheral side that are responsible for low NOx combustion and the local fuel-air ratio is higher than expected, so that reduction in the amount of NOx emissions is difficult to be promoted.
   In contrast, as shown in Fig. 8, the deviation in the air flow rate can be minimized in each of the first to eighth rows in the combustor 2 according to the first embodiment, as against the combustor of the known structure. Thus, the fuel flow rate in each row can be set on the assumption that the air flow rates in the first to eighth rows are substantially uniform to thereby maintain stable combustion even when the degree of uniformity of fuel is set to be equal to or higher than the degree of uniformity A and to achieve low NOx combustion in the rows on the outer peripheral side (fifth to eighth rows), thereby the amount of NOx emissions can be reduced more than in the combustor of the known structure.
   In the first embodiment, the wall portion 37A is disposed so as to protrude from the outer peripheral surface of the air hole plate 32 further on the outer peripheral side of the inner casing 10. Part of the high-pressure air 101 is thereby made to collide with the wall portion 37A to be supplied to the outer peripheral portion of the combustion chamber 50 on the side of the air hole plate 32 via the outer peripheral flow path 94 formed between the outer peripheral surface of the air hole plate 32 and the inner casing 10. This arrangement further allows stable combustion of the burner 5 to be maintained. Additionally, the high-pressure air 101 is lower in temperature than the combustion gas 102, thereby it is possible to cool the air hole plate 32 from the outer peripheral surface side.
(2) The first and second annular flow paths 48 and 47 are each a flat circular pipe flow path. As a result, the high-pressure air 101 that has flowed from the first annular flow path 48 into the outer peripheral flow path 94 (auxiliary air 105) typically has a slight flow rate deviation in the circumferential direction of the burner 5. In contrast, in the first embodiment, the high-pressure air 101 is made to collide with the wall portion 37A to thereby enable static pressure recovery for the high-pressure air 101. This arrangement allows the flow rate of the auxiliary air 105 in the circumferential direction of the burner 5 to be equalized and the deviation in the flow rate of the auxiliary air 105 in the circumferential direction of the burner 5 to be minimized before the auxiliary air 105 is supplied to the combustion chamber 50. Stable combustion of the burner 5 can thus be further maintained.
(3) In the first embodiment, the spring seal 14 disposed between the outer peripheral surface of the air hole plate 32 and the inner casing 10 has a hole formed which the auxiliary air 105 can circulate. This configuration allows the high-pressure air 101 flowing through the outer peripheral flow path 94 to be guided into the through hole 92, while holding the air hole plate 32 inside the inner casing 10.
(4) In the first embodiment, the extension 93 extends from the wall surface of the air hole plate 32 on the side adjacent to the combustion chamber 50 toward the downstream side in the flow direction of the combustion gas 102. The extension 93 gives an additional length for holding the spring seal 14 against the inner casing 10, so that the air hole plate 32 can be held against the inner casing 10 even more reliably.
(5) In the first embodiment, coaxial jets of the fuel jets 34 and the air jets 35 are injected into the combustion chamber 50 from the air holes 33 formed in the air hole plate 32. This increases the number of interfaces between fuel and air to thereby further promote mixing of fuel and air. Thus, the amount of NOx emissions can be reduced during combustion in the combustion chamber 50.
(6) In the first embodiment, the air holes 33A are formed to be associated with the respective fuel nozzles 91. This configuration hampers continuous formation of a combustible, unburned mixture in a space formed between the air hole plate 32 and the fuel header 40 (supply flow path 41). Thus, erosion of the air hole plate 32 by a flame that flows back into this space can be avoided, so that reliability of the combustor 2 can be enhanced.
(7) In the first embodiment, the air hole 33B is circumferentially inclined at the angle α° with respect to the air hole 33A, so that the fluid that flows through the air hole 33B is injected from the air hole 33B, being accompanied by a swirl component. This forms a circulating flow downstream of the burner 5, so that an even more stable flame can be formed.
(8) In the first embodiment, the fuel header 40 is partitioned into the first to fourth header portions 40A to 40D and the flow rate of each of the F1 to F4 fuels supplied to the first to fourth burner portions 5A to 5D from the fuel system 200 can be individually controlled (regulated). This arrangement enables fuel staging in which the number of fuel nozzles 91 to which fuel is supplied is varied in a stepwise fashion according to the fuel flow rate required in each of different operating stages of the gas turbine. Thus, stable combustion during partial load operation of the gas turbine can be achieved and the amount of NOx emissions can be reduced.

### <Second Embodiment>

### (Configuration)

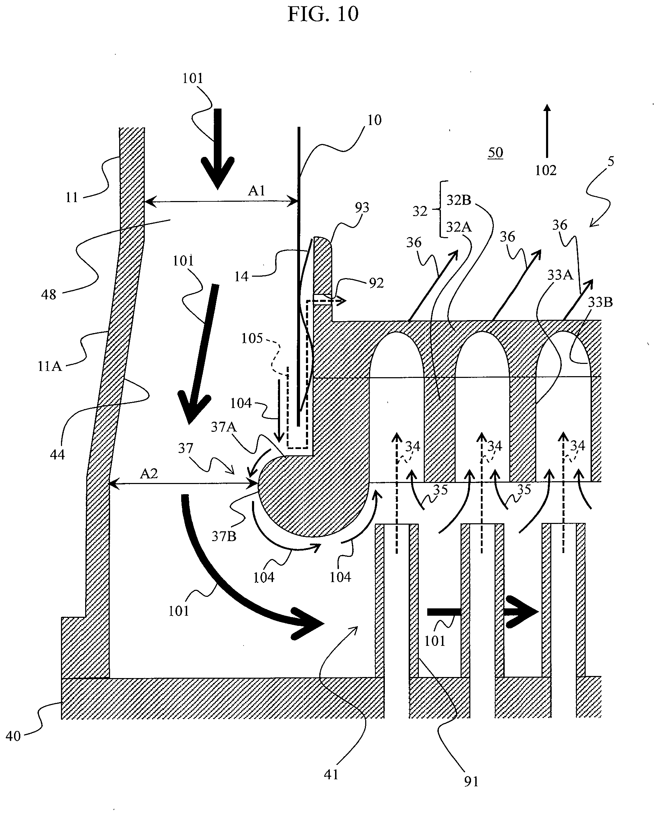

Fig. 10 is a diagram showing schematically the flow of fuel and air in areas around a guide according to a second embodiment. In Fig. 10, the upper side as viewed from the viewer is the air upstream side and the lower side as viewed from the viewer is the air downstream side. In Fig. 10, like or corresponding parts are identified by the same reference numerals as those used in the first embodiment and descriptions for those parts will be omitted as appropriate.

A combustor according to the second embodiment differs from the combustor 2 according to the first embodiment in that a first annular flow path 48 includes a flow path expanded portion 44. The combustor in the second embodiment is configured identically to the combustor 2 in the first embodiment in other respects.

As shown in Fig. 10, in the second embodiment, a portion of the outer casing 11 extending from a position opposed to an end on the combustion gas downstream side of an extension 93 of an air hole plate 32 across the first annular flow path 48 to a position opposed to an apex of a guide 37 is inclined outwardly in the radial direction toward the air downstream side, thereby forming the flow path expanded portion 44. The above-described portion of the outer casing 11 will hereinafter be referred to as an inclined portion 11A. The inclined portion 11A is a linear inclined surface having a mild gradient in a sectional view of the air hole plate 32. The inclined portion 11A is formed such that a distance between a central axis of the air hole plate 32 and the inclined portion 11A increases toward the air downstream side. As a result, in the flow path expanded portion 44, the first annular flow path 48 has a flow path area increasing toward the air downstream side. Let A1 be the flow path area of the first annular flow path 48 between the outer casing 11 and an inner casing 10 on the air upstream side of the inclined portion 11A and let A2 be the flow path area of the first annular flow path 48 at the apex of the guide 37. Then, in the second embodiment, the flow path expanded portion 44 is formed such that A1 ≤ A2 is satisfied. It is noted that the inclined portion 11A may be any portion other than the portion described above when the flow path expanded portion 44 is formed such that A1 ≤ A2 is satisfied.

### (Effects)

The second embodiment achieves the following effects in addition to the effects similar to those achieved by the first embodiment.

In the first embodiment, while the outer casing 11 is formed into a right circular cylinder extending in the flow direction of the high-pressure air 101, the guide 37 at the apex has an outside diameter greater than an outside diameter of the inner casing 10, so that A2 is smaller than A1 (A2 < A1). Thus, the flow velocity of the high-pressure air 101 increases when the high-pressure air 101 flows past the apex of the guide 37. The total pressure loss can thus be increased.

In contrast, in the second embodiment, the flow path expanded portion 44 is formed such that A2 is equal to or greater than A1 (A1 ≤ A2). This arrangement prevents the flow velocity of the high-pressure air 101 from increasing when the high-pressure air 101 flows past the apex of the guide 37, so that the total pressure loss can be prevented from increasing.

### <Third Embodiment>

### (Configuration)

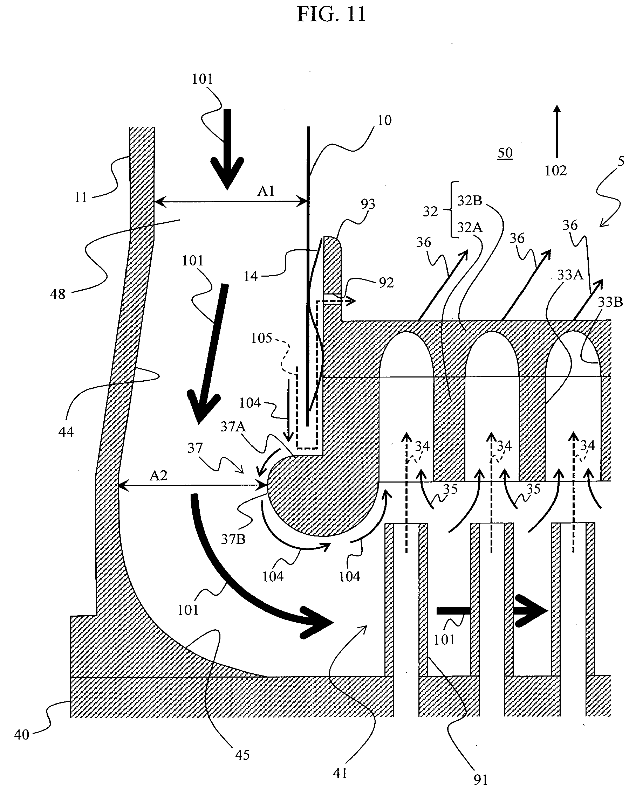

Fig. 11 is a diagram showing schematically the flow of fuel and air in areas around a guide according to a third embodiment. In Fig. 11, the upper side as viewed from the viewer is the air upstream side and the lower side as viewed from the viewer is the air downstream side. In Fig. 11, like or corresponding parts are identified by the same reference numerals as those used in the second embodiment and descriptions for those parts will be omitted as appropriate.

A combustor according to the third embodiment differs from the combustor according to the second embodiment in that an outer casing 11 includes a curved surface portion 45. The combustor in the third embodiment is configured identically to the combustor in the second embodiment in other respects.

As shown in Fig. 11, the curved surface portion 45 is curved into a recessed shape so as to follow a profile of a bent portion 37B of a guide 37. The curved surface portion 45 arcuately extends from a flow path expanded portion 44 to a fuel header 40 to thereby connect therebetween. Specifically, the curved surface portion 45 is formed into a curved surface smoothly connecting between the flow path expanded portion 44 and the fuel header 40. It should be noted that the third embodiment has been described for an exemplary configuration in which the outer casing 11 includes the curved surface portion 45. Alternatively, the fuel header 40 may include the curved surface portion 45.

### (Effects)

The third embodiment achieves the following effects in addition to the effects similar to those achieved by the second embodiment.

The configuration in the third embodiment includes the recessed, curved surface portion 45 that arcuately extends from the flow path expanded portion 44 to the fuel header 40. This configuration allows the high-pressure air 101 flowing near the surface of the curved surface portion 45 to be guided along the curved surface portion 45 and smoothly diverted, so that the high-pressure air 101 flows into a supply flow path 41. As a result, a velocity distribution in the radial direction of the high-pressure air 101 that flows from a first annular flow path 48 into the supply flow path 41 can be equalized and the total pressure loss can be further reduced.

### <Fourth Embodiment>

### (Configuration)

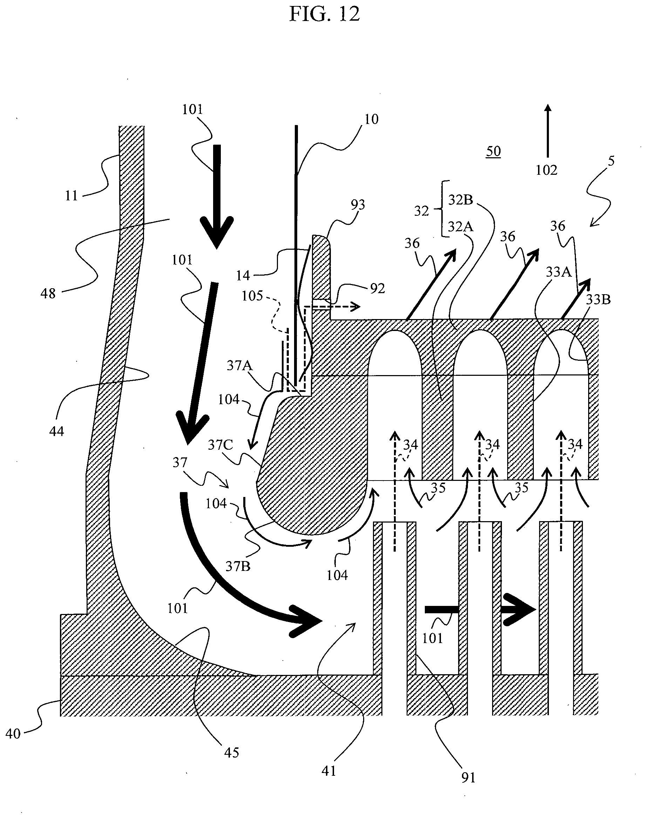

Fig. 12 is a diagram showing schematically the flow of fuel and air in areas around a guide according to a fourth embodiment. In Fig. 12, the upper side as viewed from the viewer is the air upstream side and the lower side as viewed from the viewer is the air downstream side. In Fig. 12, like or corresponding parts are identified by the same reference numerals as those used in the third embodiment and descriptions for those parts will be omitted as appropriate.

A combustor according to the fourth embodiment differs from the combustor according to the third embodiment in that a guide 37 includes a taper portion 37C. The combustor in the fourth embodiment is configured identically to the combustor in the third embodiment in other respects.

As shown in Fig. 12, the taper portion 37C is disposed between a wall portion 37A and a bent portion 37B and the wall portion 37A and the bent portion 37B are each smoothly connected to the taper portion 37C. This configuration results in taper portion 37C assuming a smooth connection between the wall portion 37A and the bent portion 37B. Specifically, in the fourth embodiment, the bent portion 37B is formed so as to connect between the taper portion 37C and an air hole 33A on an outermost periphery in the radial direction of a base plate 32A. In a section in the axial direction of a burner 5, the taper portion 37C is inclined outwardly in the radial direction toward the air downstream side with respect to a central axis of an air hole plate 32. As a result, a distance between the taper portion 37C and the central axis of the air hole plate 32 increases toward the air downstream side.

### (Effects)

The effects similar to those achieved by the third embodiment can be achieved by disposing the taper portion 37C between the wall portion 37A and the bent portion 37B of the guide 37 as in the fourth embodiment.

In addition, disposing the upwardly inclined taper portion 37C between the wall portion 37A and the bent portion 37B of the guide 37 allows the high-pressure air 101 to be mildly guided from the wall portion 37A to the bent portion 37B. As a result, the flow velocity of the high-pressure air 101 near the guide 37 can be prevented from increasing and the total pressure loss can be prevented from increasing.

### <Fifth Embodiment>

### (Configuration)

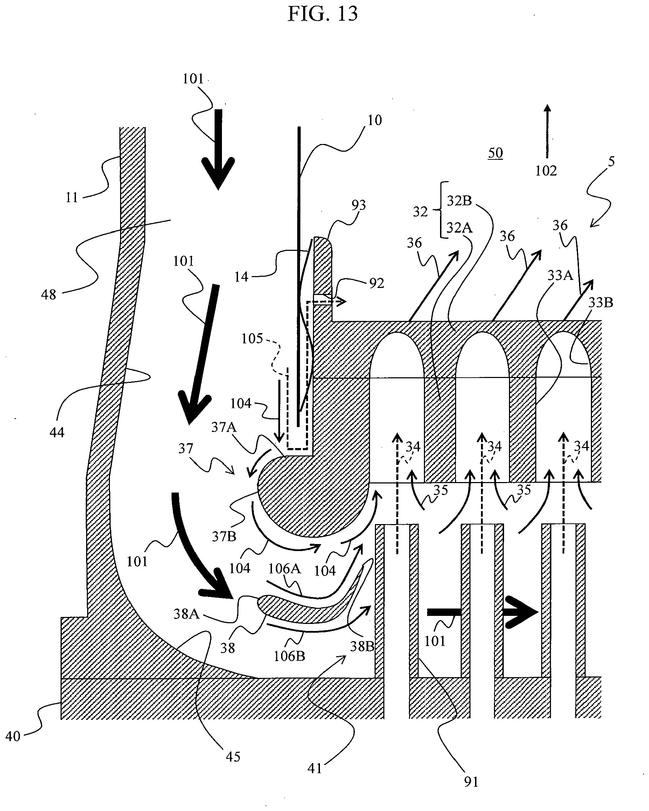

Fig. 13 is a diagram showing schematically the flow of fuel and air in areas around a guide according to a fifth embodiment. In Fig. 13, the upper side as viewed from the viewer is the air upstream side and the lower side as viewed from the viewer is the air downstream side. In Fig. 13, like or corresponding parts are identified by the same reference numerals as those used in the third embodiment and descriptions for those parts will be omitted as appropriate.

A combustor according to the fifth embodiment differs from the combustor according to the third embodiment in a guide vane 38 included therein. The combustor in the fifth embodiment is configured identically to the combustor in the third embodiment in other respects.

As shown in Fig. 13, the guide vane 38 is disposed between a guide 37 in a first annular flow path 48 and a fuel header 40. The guide vane 38 includes a front edge portion 38A and a rear edge portion 38B. The guide vane 38 is disposed such that the rear edge portion 38B is disposed, with respect to the front edge portion 38A, on the inside in the radial direction of an air hole plate 32 and on the side of an air hole on an outermost periphery in the radial direction of the air hole plate 32. Additionally, the guide vane 38 is disposed such that a ventral side surface (positive pressure surface, specifically, the recessed surface) thereof faces the air hole plate 32 and a dorsal side surface (negative pressure surface, specifically, the protruding surface) thereof faces the fuel header 40. The ventral side surface is curved to substantially follow the profile of a bent portion 37B. It is noted that, in the fifth embodiment, the guide vane 38 is configured to be a ring shape coaxial with the burner 5 as viewed from the axial direction of the burner 5. A plurality of guide vanes may nonetheless be disposed annularly. In addition, in the fifth embodiment, the guide vane 38 is disposed such that a distance between the guide vane 38 and an end on the air downstream side of the guide 37 in the axial direction of the burner 5 is substantially equal to a distance between the guide vane 38 and the fuel header 40. The position of the guide vane 38 between the end on the air downstream side of the guide 37 and the fuel header 40 is not, however, limiting.

### (Effects)

The fifth embodiment achieves the following effects in addition to the effects similar to those achieved by the third embodiment.

In the fifth embodiment, the guide vane 38 is disposed between the guide 37 in the first annular flow path 48 and the fuel header 40. This arrangement allows outer peripheral side vane air 106B that flows along an outer peripheral side (dorsal side) to be guided inwardly in the radial direction of the burner 5, while guiding inner peripheral side vane air 106A that flows along an inner peripheral side (ventral side) of the guide vane 38 outwardly in the radial direction of a base plate 32A, or, in particular, the air hole 33A on the outermost periphery. Thus, a deviation in the air flow rate supplied to the air hole 33A can be further minimized, so that maintenance of stable combustion and reduction in the amount of NOx emissions can be promoted.

### <Sixth Embodiment>

### (Configuration)

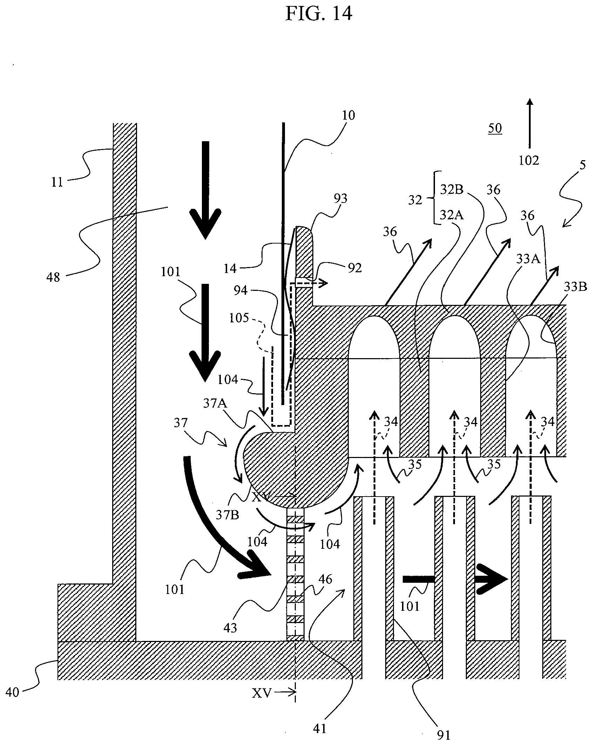

Fig. 14 is a diagram showing schematically the flow of fuel and air in areas around a guide according to a sixth embodiment. In Fig. 14, the upper side as viewed from the viewer is the air upstream side and the lower side as viewed from the viewer is the air downstream side. In Fig. 14, like or corresponding parts are identified by the same reference numerals as those used in the first embodiment and descriptions for those parts will be omitted as appropriate.

A combustor according to the sixth embodiment differs from the combustor according to the first embodiment in a multi-hole plate (connecting member) 43 included in place of the support 15. The combustor in the sixth embodiment is configured identically to the combustor in the first embodiment in other respects.

The multi-hole plate 43 is a short pipe member coaxial with an inner casing 10. The multi-hole plate 43 is disposed so as to separate a first annular flow path 48 from a supply flow path 41. The multi-hole plate 43 connects an end on the air downstream side of a guide 37 with a fuel header 40. Specifically, an air hole plate 32 is mounted on the fuel header 40 via the multi-hole plate 43.

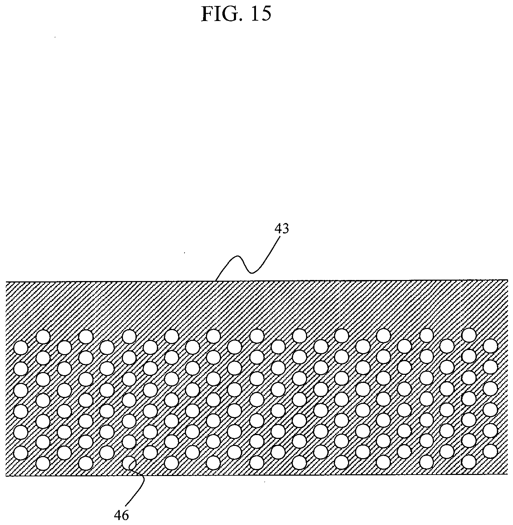

Fig. 15 is a cross-sectional view taken along the arrowed line XV-XV of Fig. 14. In the sixth embodiment, the multi-hole plate 43 has a plurality of circular communication holes 46 arrayed in rows extending in the axial direction and the circumferential direction as shown in Fig. 15. The communication holes 46 provide communication between the first annular flow path 48 and the supply flow path 41. The high-pressure air 101 that flows through the first annular flow path 48 passes through the communication holes 46 to enter the supply flow path 41. It is noted that, as shown in Fig. 14, the multi-hole plate 43 is disposed such that the communication holes 46 are disposed near the end on the air downstream side of the guide 37. Thus, the high-pressure air 101 (nearby air 104) that flows along the surface of a bent portion 37B of the guide 37 enters the supply flow path 41 through these communication holes 46.

### (Effects)

The sixth embodiment achieves the following effects in addition to the effects similar to those achieved by the first embodiment.

In the sixth embodiment, the multi-hole plate 43 having a plurality of communication holes 46 is disposed so as to separate the first annular flow path 48 from the supply flow path 41. The high-pressure air 101 flowing through the first annular flow path 48 is thus smoothed by the communication holes 46 before entering the supply flow path 41. As a result, the nearby air 104 can be guided outwardly in the radial direction of a base plate 32A, or in particular, to an air hole 33A on the outermost periphery more efficiently. In addition, a deviation in the flow rate in the circumferential direction of a burner 5 of the high-pressure air 101 that flows from the first annular flow path 48 into the supply flow path 41 can be further minimized, so that combustion stability can be enhanced and the amount of NOx emissions can be further reduced.

### (Modification)

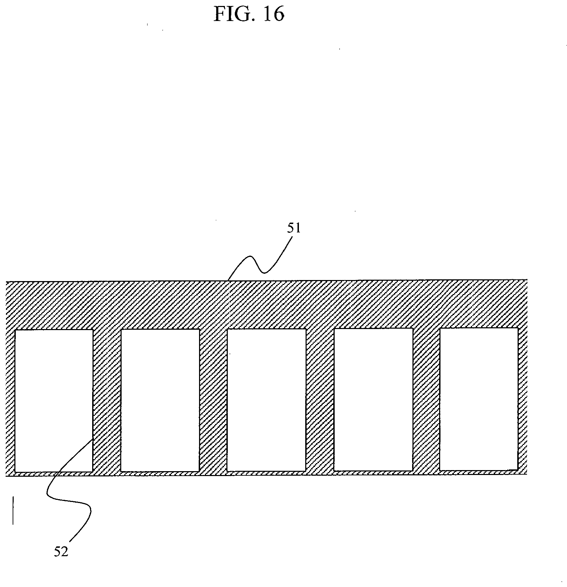

Fig. 16 is a diagram showing a modification of the multi-hole plate according to the sixth embodiment. In place of the multi-hole plate 43 described above, a multi-window support (connecting member) 51 as shown in Fig. 16 may be provided. As shown in Fig. 16, the multi-window support 51 has a plurality of rectangular windows 52 arrayed in the circumferential direction. In the modification, the windows 52 are arrayed in one row in the axial direction and the windows 52 are each formed to have an opening area greater than each of the communication holes 46.

Even with the multi-window support 51 incorporated in place of the multi-hole plate 43, the high-pressure air 101 flowing through the first annular flow path 48 is smoothed, so that the effects similar to those achieved by the sixth embodiment can be achieved. In addition, the windows 52 are each formed to have an opening area greater than an opening area of each of the communication holes 46. This arrangement allows the multi-window support 51 to decrease differential pressure between the air upstream side and the air downstream side of the multi-window support 51 than in the multi-hole plate 43, so that the total pressure loss can be prevented from increasing.

The multi-hole plate 43 and the multi-window support 51 shown in Figs. 14, 15 and 16 can be applied to the gas turbine combustors according to first to fifth embodiments.

### <Seventh Embodiment>

### (Configuration)

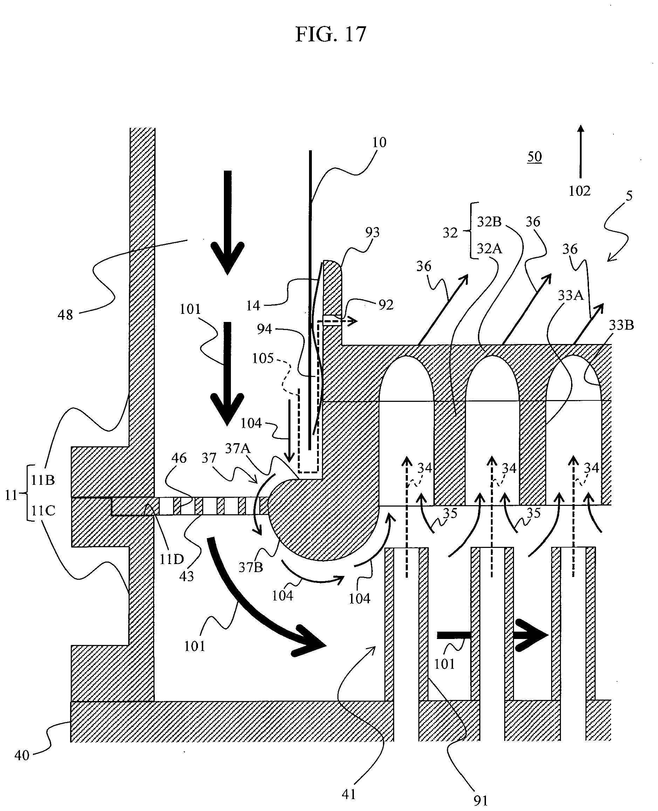

Fig. 17 is a diagram showing schematically the flow of fuel and air in areas around a guide according to a seventh embodiment. In Fig. 17, the upper side as viewed from the viewer is the air upstream side and the lower side as viewed from the viewer is the air downstream side. In Fig. 17, like or corresponding parts are identified by the same reference numerals as those used in the sixth embodiment and descriptions for those parts will be omitted as appropriate.

A combustor according to the seventh embodiment differs from the combustor according to the sixth embodiment in that the multi-hole plate 43 is disposed at a position different from the position at which the multi-hole plate 43 in the sixth embodiment is disposed. The combustor in the seventh embodiment is configured identically to the combustor in the sixth embodiment in other respects.

As shown in Fig. 17, in the seventh embodiment, an outer casing 11 includes a first outer casing 11B and a second outer casing 11C. The first outer casing 11B is disposed such that an end thereof on the air downstream side faces an apex of a guide 37 across a first annular flow path 48. The second outer casing 11C is disposed such that an end thereof on the air upstream side connects with the end on the air downstream side of the first outer casing 11B and an end thereof on the air downstream side connects with a fuel header 40. A space 11D is formed between the end on the air downstream side of the first outer casing 11B and the end on the air upstream side of the second outer casing 11C.

The multi-hole plate 43 has a lower end portion (the end on the side close to an air hole plate 32) connecting with the apex of the guide 37 and an upper end portion (the end spaced away from the air hole plate 32) inserted in the space 11D. In the seventh embodiment, the multi-hole plate 43 is a disc-shaped plate coaxial with an inner casing 10, connecting the apex of the guide 37 with the outer casing 11. Specifically, the air hole plate 32 is mounted on the outer casing 11 via the multi-hole plate 43. In the seventh embodiment, the multi-hole plate 43 is formed into a doughnut-shaped disc coaxial with a burner 5.

The configuration in which the multi-hole plate 43 is disposed so as to connect between the apex of the guide 37 and the outer casing 11 as in the seventh embodiment can achieve the effects similar to those achieved by the sixth embodiment. Additionally, the above-described multi-window support 51 may be applied in place of the multi-hole plate 43 also in the seventh embodiment. In this case, the effects similar to those achieved by the modification described above can be achieved.

The multi-hole plate 43 shown in Fig. 17 can be applied to the gas turbine combustors according to first to fifth embodiments.

### <Eighth Embodiment>

### (Configuration)

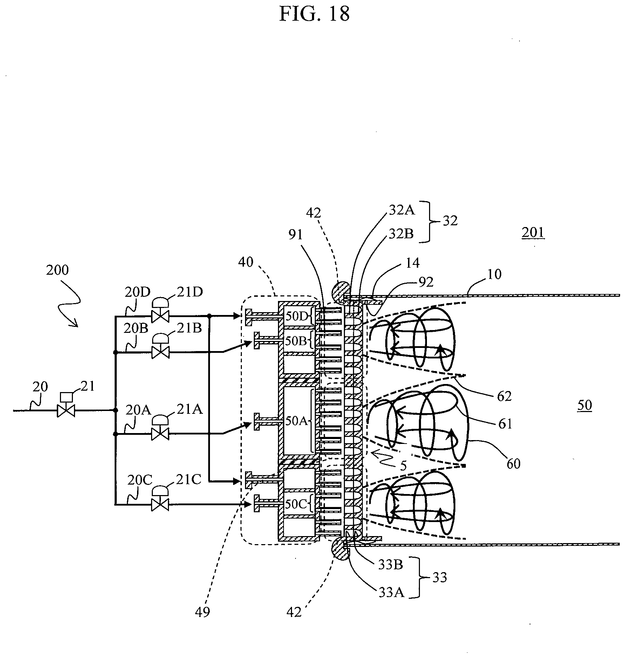

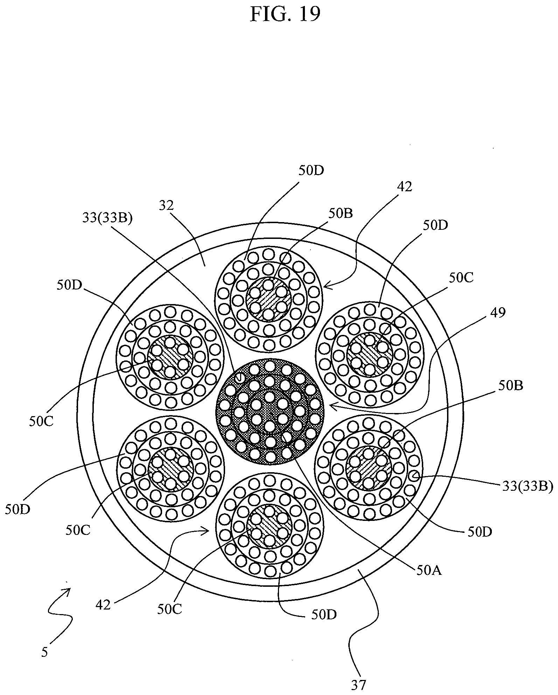

Fig. 18 is a sectional view of a combustor according to an eighth embodiment. Fig. 19 is a view of an air hole plate of the combustor according to the eighth embodiment as viewed from the combustion gas downstream side. In Figs. 18 and 19, like or corresponding parts are identified by the same reference numerals as those used in the first embodiment and descriptions for those parts will be omitted as appropriate.

A combustor 201 according to the eighth embodiment is what is called a multi-injection gas turbine combustor that includes a plurality of burners disposed at a combustion portion, each of the burners including a plurality of fuel nozzles and a plurality of air holes arrayed concentrically.

As shown in Figs. 18 and 19, the combustor 201 includes one burner (pilot burner) 49 and six burners (main burners) 42. Specifically, the pilot burner 49 is disposed at a center of the combustion portion coaxially with the combustor 201. The main burners 42 are disposed around the pilot burner 49. Specifically, in the eighth embodiment, the combustor 201 has a multi-burner configuration including seven burners. The pilot burner 49 and the main burners 42 share an air hole plate 32. It should be noted that, in the eighth embodiment, the pilot burner 49 and the main burners 42 are each partitioned into a plurality of (three in the eighth embodiment) concentric annular rows. The annular rows are referred to, as appropriate, as a first row, a second row, and a third row from the inner peripheral side toward the outer peripheral side.

The pilot burner 49 includes a plurality of fuel nozzles 91 and part of the air hole plate 32. Specifically, the fuel nozzles 91 are arrayed concentrically into the first to third rows. The part of the air hole plate 32 has a plurality of air holes 33 (33A and 33B) formed to be associated with the respective fuel nozzles 91. The main burners 42 each include a plurality of fuel nozzles 91 and another part of the air hole plate 32. Specifically, the fuel nozzles 91 are arrayed concentrically into the first to third rows. The other part of the air hole plate 32 has a plurality of air holes 33 (33A and 33B) formed to be associated with the respective fuel nozzles 91.

A first fuel system 20A is connected with a first burner portion 50A that constitutes the first to third rows of the pilot burner 49. A second fuel system 20B is connected with second burner portions 50B that constitute the first rows of two main burners 42 out of the six main burners 42. A third fuel system 20C is connected with third burner portions 50C that constitute the first rows of other four main burners 42 out of the six main burners 42. A fourth fuel system 20D is connected with fourth burner portions 50D that constitute the second and third rows of the six main burners 42.

In the eighth embodiment, too, as in the first embodiment, the portion of the high-pressure air 101 that has not been used for the film cooling of the inner casing 10 flows from the first annular flow path 48 into a supply flow path 41 and is supplied to the air holes 33A in the base plate 32A as air jets 35. Fuels injected from the fuel nozzles 91 are mixed with the air jets 35 and injected as fuel-air pre-mixtures from the air holes 33B, so that swirl flows 60 are formed downstream of the pilot burner 49 and the main burners 42, respectively. The swirl flows 60 generate circulating flows 61, so that flame surfaces 62 are formed. It is noted that, in the eighth embodiment, too, as in the first embodiment, fuels supplied to the first to fourth burner portions 50A to 50D can be individually regulated, thereby achieve fuel staging.

### (Effects)

The effects achieved by the first embodiment can be achieved by the multi-injection gas turbine combustor configured as in the eighth embodiment. Specifically, while the first embodiment allows the high-pressure air 101 (nearby air 104) that flows near the surface of the bent portion 37B to be guided to the outside in the radial direction of the base plate 32A, or in particular, the air hole 33 on the outermost periphery, the eighth embodiment allows the nearby air 104 to be guided to the air holes 33 on the side adjacent to the guide 37 of the air holes 33 disposed on the outermost peripheral rows (third rows) of the main burners 42, or in particular, the air holes closest to the guide 37. This enables supply of the high-pressure air 101 uniformly to the air holes in the pilot burner 49 and the main burners 42. Thus, a deviation in the flow rate in the circumferential direction of a burner 5 of the high-pressure air 101 supplied to the air holes 33 in the pilot burner 49 and the main burners 42 can be minimized, so that combustion stability and low NOx combustion can both be achieved.

The multi-injection gas turbine combustor shown in Figs. 18 and 19 can be applied as the gas turbine combustors according to second to seventh embodiments as well as the first embodiment.

### <Others>

It should be noted that the present invention is not limited to the above-described embodiments and may include various modifications. For example, the entire detailed configuration of the embodiments described above for ease of understanding of the present invention is not always necessary to embody the present invention. Part of the configuration of one embodiment may be replaced with the configuration of another embodiment, or the configuration of one embodiment may be combined with the configuration of another embodiment.

In each of the embodiments described above, the air holes 33 in the air hole plate 32 have been described to be formed circumferentially along the respective annular rows. It is, however, the object of the present invention to provide a combustor capable of achieving an essential effect of reducing a deviation in the air flow rate supplied to each air hole. The air holes 33 do not, therefore, necessarily have to be disposed circumferentially along the respective annular rows, if the essential effect can be achieved. For example, the air holes 33 may be formed in part of the annular rows on the outer peripheral side.

The first to fourth embodiments have been described for the configuration in which the air holes 33A and 33B are formed in the first to eighth rows arranged concentrically in the base plate 32A and the swirl plate 32B. The number of air hole rows formed in the base plate 32A and the swirl plate 32B does not, however, have to be eight, if the essential effect of the present invention described above can be achieved. The number of air hole rows formed in the base plate 32A and the swirl plate 32B may be seven or less, or nine or more.

Each of the embodiments described above has been described for the configuration in which the leading ends of the fuel nozzles 91 are spaced away from the first inlets of the air holes 33A in the base plate 32A. The above-described configuration is not necessarily required, if the essential effect of the present invention described above can be achieved. For example, the leading ends of the fuel nozzles 91 may be inserted in the air holes 33. In this case, an area of each of the first inlets of the air holes 33A decreases to allow the air jet 35 to build up a flow velocity thereof, so that mixing of fuel injected from the fuel nozzle 91 and air can be further promoted.

Each of the embodiments described above has been described for the configuration in which the leading end of the fuel nozzle 91 is shaped into a simple cylindrical form. The cylindrical shape of the leading end of the fuel nozzle 91 is not necessarily required, if the essential effect of the present invention described above can be achieved. For example, the leading end of the fuel nozzle 91 may have a protrusion that protrudes radially therefrom. The protrusion generates a swirl flow in the fuel injected from the fuel nozzle 91, to thereby further promote mixing of fuel and air. Alternatively, the leading end of the fuel nozzle 91 may have a plurality of fuel injection ports. This configuration enhances initial dispersion of fuel to thereby further promote mixing of fuel and air.

Each of the embodiments described above has been described for the configuration in which the bent portion 37B of the guide 37 is formed to be connected with the air hole 33A on the outermost periphery in the radial direction of the base plate 32A. However, even when a clearance is formed between the bent portion 37B and the air hole 33A on the outermost periphery in the radial direction of the base plate 32A, that is, even when the bent portion 37B is spaced away from the air hole 33A on the outermost periphery in the radial direction of the base plate 32A, the high-pressure air 101 (nearby air 104) can be guided into the air hole 33A on the outermost periphery in the radial direction of the base plate 32A.

## Claims

1. A gas turbine combustor (2), comprising:
an inner casing (10) that defines thereinside a combustion chamber (50);
an outer casing (11) disposed so as to cover the inner casing (10);
an annular flow path (48) disposed between the inner casing (10) and the outer casing (11), the annular flow path (48) allowing high-pressure air (101) to flowing therethrough;
a fuel header (40) disposed downstream of the outer casing (11) in a flow direction of the high-pressure air (101);
a plurality of fuel nozzles (91) supported concentrically on the fuel header (40);
an air hole plate (32) disposed downstream of the fuel nozzles (91) in a flow direction of fuel, the air hole plate (32) having a plurality of air holes (33) associated with the respective fuel nozzles (91); **characterized in that** the gas turbine combustor (2) comprises:
a guide (37) including a wall portion (37A) that protrudes from an outer peripheral surface of the air hole plate (32) further than an outer peripheral side of the inner casing (10) and a bent portion (37B) formed into a convex shape protruding toward the outer casing (11) and the fuel header (40) and arcuately connected with those of said plurality of air holes (33) that are arranged on an outermost periphery in a radial direction of the air hole plate (32); and
an outer peripheral flow path (94) defined between the outer peripheral surface of the air hole plate (32) and the inner casing (10), the outer peripheral flow path (94) supplying an outer peripheral portion of a part of the combustion chamber (50) on a side of the air hole plate (32) with the high-pressure air (101).

2. The gas turbine combustor (2) according to claim 1, further comprising:
a spring seal (14) disposed between the outer peripheral surface of the air hole plate (32) and the inner casing (10), wherein
the spring seal (14) has a hole formed therein, through which the high-pressure air (101) can circulate.

3. The gas turbine combustor (2) according to claim 1 or 2, wherein:
the air hole plate (32) includes an extension (93) disposed on an outer peripheral portion thereof, the extension (93) extending from a wall surface on a side adjacent to Mitsubishi Hitachi Power Systems, Ltd.
the combustion chamber (50) downstream in a flow direction of combustion gas (102), and
the outer peripheral flow path (94) has an outlet formed to pass through the extension.

4. The gas turbine combustor (2) according to at least one of claim 1 to 3, wherein the annular flow path (48) includes a flow path expanded portion having a flow path area increasing toward a downstream side in the flow direction of the high-pressure air (101).

5. The gas turbine combustor (2) according to at least one of claim 1 to 4, wherein the outer casing (11) or the fuel header (40) includes a curved surface portion (45) curved to follow a profile of the bent portion (37B).

6. The gas turbine combustor (2) according to at least one of claim 1 to 5, further comprising:
a guide vane (38) disposed between the guide (37) in the annular flow path (48) and the fuel header (40), wherein
the guide vane (38) is disposed such that a rear edge portion (38B) thereof is disposed, with respect to a front edge portion (38A) thereof, on an inside in the radial direction of the air hole plate (32) and on a side of the air hole on the outermost periphery of the air hole plate (32).

7. The gas turbine combustor (2) according to at least one of claim 1 to 6, further comprising:
a supply flow path (41) disposed between the air hole plate (32) and the fuel header (40); and
an annular connecting member that separates the annular flow path (48) from the supply flow path (41), wherein
the annular connecting member has a communication hole that provides communication between the annular flow path (48) and the supply flow path (41).

8. A gas turbine plant (1000), comprising:
a compressor (1) that compresses air;
the gas turbine combustor (2) according to at least one of claim 1 to 7, the gas turbine combustor (2) mixing high-pressure air (101) supplied from the compressor (1) with fuel to burn a resultant mixture; and
a turbine (3) rotatably driven by combustion gas supplied from the gas turbine combustor (2).

## Patentansprüche

1. Gasturbinen-Verbrennungseinrichtung (2), die Folgendes umfasst:
ein Innengehäuse (10), in dem eine Verbrennungseinrichtung (50) definiert ist;
ein Außengehäuse (11), das ausgelegt ist, das Innengehäuse (10) zu bedecken;
einen ringförmigen Strömungsweg (48), der zwischen dem Innengehäuse (10) und dem Außengehäuse (11) angeordnet ist, wobei der ringförmige Strömungsweg (48) Hochdruckluft (101) erlaubt, hindurchzuströmen;
einen Brennstoffverteiler (40), der in einer Strömungsrichtung der Hochdruckluft (101) hinter dem Außengehäuse (11) angeordnet ist;
mehrere Brennstoffdüsen (91), die auf dem Brennstoffverteiler (40) konzentrisch getragen werden;
eine Luftlochplatte (32), die in einer Strömungsrichtung des Brennstoffs hinter den Brennstoffdüsen (91) angeordnet sind, wobei die Luftlochplatte (32) mehrere Luftlöcher (33) aufweist, die-den entsprechenden Brennstoffdüsen (91) zugeordnet sind; **dadurch gekennzeichnet, dass** die Gasturbinenverbrennungseinrichtung (2) Folgendes umfasst:
eine Führung (37), die einen Wandabschnitt (37A), der weiter als eine Außenumfangsseite des Innengehäuses (10) von einer Außenumfangsfläche der Luftlochplatte (32) vorsteht, und einen gebogenen Abschnitt (37B), der in eine konvexe Form ausgebildet ist, in Richtung des Außengehäuses (11) und des Brennstoffverteilers (40) vorsteht und mit jenen der mehreren Luftlöcher (33), die in radialer Richtung an einem äußersten Rand der Luftlochplatte (32) angeordnet sind, bogenförmig verbunden ist, enthält; und
ein Außenumfangsströmungsweg (94), der zwischen der Außenumfangsfläche der Luftlochplatte (32) und dem Innengehäuse (10) definiert ist, wobei der Außenumfangsströmungsweg (94) einem Außenumfangsabschnitt eines Teils der Verbrennungseinrichtung (50) auf einer Seite der Luftlochplatte (32) die Hochdruckluft (101) zuführt.

2. Gasturbinen-Verbrennungseinrichtung (2) nach Anspruch 1, die ferner Folgendes umfasst:
eine Federdichtung (14), die zwischen der Außenumfangsfläche der Luftlochplatte (32) und dem Innengehäuse (10) angeordnet ist, wobei
in der Federdichtung (14) ein Loch gebildet ist, durch das die Hochdruckluft (101) zirkulieren kann.

3. Gasturbinen-Verbrennungseinrichtung (2) nach Anspruch 1 oder 2, wobei:
die Luftlochplatte (32) eine Verlängerung (93) enthält, die an einem Außenumfangsabschnitt davon angeordnet ist, wobei sich die Verlängerung (93) von einer Wandfläche erstreckt, die sich in einer Strömungsrichtung des Brenngases (102) stromabwärts auf einer Seite neben der Verbrennungseinrichtung (50) befindet, und
der Außenumfangsströmungsweg (94) einen Auslass aufweist, der so ausgebildet ist, dass er durch die Verlängerung verläuft.

4. Gasturbinen-Verbrennungseinrichtung (2) nach mindestens einem der Ansprüche 1 bis 3, wobei der ringförmige Strömungsweg (48) einen erweiterten Abschnitt des Strömungswegs enthält, der einen Strömungswegbereich aufweist, der in der Strömungsrichtung der Hochdruckluft (101) in Richtung einer stromabwärtigen Seite größer wird.

5. Gasturbinen-Verbrennungseinrichtung (2) nach mindestens einem der Ansprüche 1 bis 4, wobei das Außengehäuse (11) oder der Brennstoffverteiler (40) einen gekrümmten Oberflächenabschnitt (45) enthält, der gekrümmt ist, um einem Profil des gebogenen Abschnitts (37B) zu folgen.

6. Gasturbinen-Verbrennungseinrichtung (2) nach mindestens einem der Ansprüche 1 bis 5, die ferner Folgendes umfasst:
eine Leitschaufel (38), die zwischen der Führung (37) in dem ringförmigen Strömungsweg (48) und dem Brennstoffverteiler (40) angeordnet ist, wobei
die Leitschaufel (38) derart angeordnet ist, dass ihr Hinterkantenabschnitt (38B) in Bezug auf ihren Vorderkantenabschnitt (38A) in radialer Richtung auf einer Innenseite der Luftlochplatte (32) und auf einer Seite des Luftlochs am äußersten Rand der Luftlochplatte (32) angeordnet ist.

7. Gasturbinen-Verbrennungseinrichtung (2) nach mindestens einem der Ansprüche 1 bis 6, die ferner Folgendes umfasst:
einen Zufuhrströmungsweg (41), der zwischen der Luftlochplatte (32) und dem Brennstoffverteiler (40) angeordnet ist; und
ein ringförmiges Verbindungselement, das den ringförmigen Strömungsweg (48) von dem Zufuhrströmungsweg (41) trennt, wobei
das ringförmige Verbindungselement ein Kommunikationsloch aufweist, das Kommunikation zwischen dem ringförmigen Strömungsweg (48) und dem Zufuhrströmungsweg (41) vorsieht.

8. Gasturbinenanlage (1000), die Folgendes umfasst:
einen Kompressor (1), der Luft komprimiert;
die Gasturbinen-Verbrennungseinrichtung (2) nach mindestens einem der Ansprüche 1 bis 7, wobei die Gasturbinen-Verbrennungseinrichtung (2) Hochdruckluft (101), die von dem Kompressor (1) zugeführt wird, mit Brennstoff mischt, um eine daraus resultierende Mischung zu verbrennen; und
eine Turbine (3), die durch das Brenngas, das von der Gasturbinen-Verbrennungseinrichtung (2) zugeführt wird, rotatorisch angetrieben wird.

## Revendications

1. Unité de combustion de turbine à gaz (2), comprenant :
un boîtier intérieur (10) qui définit à l'intérieur une chambre de combustion (50) ;
un boîtier extérieur (11) disposé de manière à couvrir le boîtier intérieur (10) ;
un trajet d'écoulement annulaire (48) disposé entre le boîtier intérieur (10) et le boîtier extérieur (11), le trajet d'écoulement annulaire (48) permettant à de l'air sous haute pression (101) de s'écouler à travers celui-ci ;
un collecteur de carburant (40) disposé en aval du boîtier extérieur (11) dans une direction d'écoulement de l'air sous haute pression (101) ;
une pluralité de buses de carburant (91) supportées concentriquement sur le collecteur de carburant (40) ;
une plaque à trous d'air (32) disposée en aval des buses de carburant (91) dans une direction d'écoulement du carburant, la plaque à trous d'air (32) ayant une pluralité de trous d'air (33) associés aux buses de carburant respective (91) ;
**caractérisée en ce que** l'unité de combustion de turbine à gaz (2) comprend :
un guide (37) incluant une portion de paroi (37A) qui se projette depuis une surface périphérique extérieure de la plaque à trous d'air (32) plus loin qu'un côté périphérique extérieur du boîtier intérieur (10) et une portion incurvée (37B) formée dans une forme convexe qui se projette vers le boîtier extérieur (11) et le collecteur de carburant (40) et reliée de manière arquée à ceux de la pluralité de trous d'air (33) qui sont agencés sur une périphérie tout à fait extérieure dans une direction radiale de la plaque à trous d'air (32) ; et
un trajet d'écoulement périphérique extérieur (94) défini entre la surface périphérique extérieure de la plaque à trous d'air (32) et le boîtier intérieur (10), le trajet d'écoulement périphérique extérieur (94) alimentant de l'air sous haute pression (101) dans une portion périphérique extérieure d'une partie de la chambre de combustion (50) sur un côté de la plaque à trous d'air (32).

2. Unité de combustion de turbine à gaz (2) selon la revendication 1, comprenant en outre :
un joint à ressort (14) disposé entre la surface périphérique extérieure de la plaque à trous d'air (32) et le boîtier intérieur (10), dans laquelle le joint à ressort (14) comporte un trou formé dans lui-même, à travers lequel l'air sous haute pression (101) peut circuler.

3. Unité de combustion de turbine à gaz (2) selon la revendication 1 ou 2, dans laquelle :
la plaque à trous d'air (32) inclut une extension (93) disposée sur une portion périphérique extérieure d'elle-même, l'extension (93) s'étendant depuis une surface de paroi sur un côté adjacent à la chambre de combustion (50) en aval dans une direction d'écoulement du gaz de combustion (102), et
le trajet d'écoulement périphérique extérieur (94) a une sortie formée pour passer à travers l'extension.

4. Unité de combustion de turbine à gaz (2) selon l'une au moins des revendications 1 à 3, dans laquelle le trajet d'écoulement annulaire (48) inclut une portion agrandie de trajet d'écoulement ayant une superficie de trajet d'écoulement qui augmente en direction d'un côté aval dans la direction d'écoulement de l'air sous haute pression (101).

5. Unité de combustion de turbine à gaz (2) selon l'une au moins des revendications 1 à 4, dans laquelle le boîtier extérieur (11) ou le collecteur de carburant (40) inclut une portion de surface incurvée (45) incurvée pour suivre un profil de la portion cintrée (37B).

6. Unité de combustion de turbine à gaz (2) selon l'une au moins des revendications 1 à 5, comprenant en outre :
une aube de guidage (38) disposée entre le guide (37) dans le trajet d'écoulement annulaire (48) et le collecteur de carburant (40), dans laquelle l'aube de guidage (38) est disposée de telle façon qu'une portion de bordure arrière (38B) de celle-ci est disposée, par rapport à une portion de bordure avant (38A) de celle-ci, sur l'intérieur dans la direction radiale de la plaque à trous d'air (32) et sur un côté du trou d'air sur la périphérie la plus extérieure de la plaque à trous d'air (32).

7. Unité de combustion de turbine à gaz (2) selon l'une au moins des revendications 1 à 6, comprenant en outre :
un trajet d'écoulement d'alimentation (41) disposé entre la plaque à trous d'air (32) et le collecteur de carburant (40) ; et
un élément de connexion annulaire qui sépare le trajet d'écoulement annulaire (48) vis-à-vis du trajet d'écoulement d'alimentation (41), dans laquelle
l'élément de connexion annulaire a un trou de communication qui assure une communication entre le trajet d'écoulement annulaire (48) et le trajet d'écoulement d'alimentation (41).

8. Installation de turbine à gaz (1000), comprenant :
un compresseur (1) qui comprime de l'air ;
une unité de combustion de turbine à gaz (2) selon l'une au moins des revendications 1 à 7, l'unité de combustion de turbine à gaz (2) mélangeant de l'air sous haute pression (101) alimenté depuis le compresseur (1) avec du carburant pour faire brûler un mélange résultant ; et
une turbine (3) entraînée en rotation par les gaz de combustion fournis depuis l'unité de combustion de turbine à gaz (2).
